# EUROPEAN PATENT SPECIFICATION

(11) **EP 1 953 014 B1**
(45) Date of publication and mention of the grant of the patent: **24.02.2010**
(21) Application number: 08000515.0
(22) Date of filing: 11.01.2008
(51) Int. Cl.: B60G 21/055

(54) **Structure for supporting stabilizer**
Struktur zur Stabilisierungsstütze
Structure de support de stabilisateur

(30) Priority: 31.01.2007 JP 2007020383
(43) Date of publication of application: 06.08.2008
(73) Proprietor: HONDA MOTOR CO., LTD., Tokyo 107-8556 (JP)
(72) Inventor: Miyamoto, Yasuo, Wako-shi Saitama 351-0193 (JP)
(74) Representative: Herzog, Markus

(56) References cited:
- WO-A-2006/112092
- DE-U1- 9 002 537
- GB-A- 2 021 707
- JP-A- 9 177 853
- JP-A- 10 184 792
- JP-A- 10 193 944
- JP-U- 4 011 710

## Description

### BACKGROUND OF THE INVENTION

### FIELD OF THE INVENTION

The present invention relates to a stabilizer supporting structure in which a vehicle body supports a stabilizer that comprises a torsion portion extending in a vehicle width direction and arm portions extending from opposite ends of the torsion portion in a longitudinal direction of the vehicle body and connected to right and left suspension devices.

### DESCRIPTION OF THE RELATED ART

Japanese Utility Model Laid-Open No. 4-11710 discloses a structure in which a shaft hole of a rubber stabilizer bush is fitted to an outer periphery of a torsion portion of a stabilizer connected to right and left suspension devices, and the stabilizer bush is supported on a vehicle-body frame by a mounting bracket. In this structure, a rib (lip) is formed at an opening end of the shaft hole of the stabilizer bush in order to prevent sand grains or mud water from entering a space between sliding faces of the stabilizer bush and the stabilizer.

In this conventional structure, the stabilizer bush is a cylindrical member without an expanding slot, and thus it is required to slide and move the stabilizer bush inserted from an end of the stabilizer to a predetermined position in the torsion portion in order to fit the stabilizer bush to the torsion portion of the stabilizer.

Because the shaft hole of the stabilizer bush has a diameter smaller that that of the stabilizer, a large force is needed to fit the stabilizer bush from the end portion of the stabilizer to slide against a friction force. Particularly when the stabilizer bush has a curved portion between the arm portion and the torsion portion, an extremely large force is required for passing the stabilizer bush through the curved portion, resulting in a problem of poor workability.

In order to solve the problem, it is conceivable that an expanding slot is formed in the stabilizer bush so that the stabilizer bush is directly fitted to the outer peripheral face of the torsion portion of the stabilizer while the stabilizer bush is expanded at the expanding slot. However, in this structure, when a load is applied to the stabilizer to expand the expanding slot, there is a problem that sand grains or mud water enters a space between sliding faces of the stabilizer bush and the stabilizer, causing noise or abrasion on the face of the stabilizer.

JP 10 193944 A, JP 09 177853 A, GB-A-2 021 707 and DE 90 02 537 U1 each show a stabilizer supporting structure without lips.

JP 04 011710 U, figs. 1 and 3, on which is the preamble of enclosed claim 1 is based, show that the intermediate portion of the fitting hole is placed in tight contact with the outer periphery of stabilizer.

WO 2006/112092 A shows an arrangement in fig. 13 having lips. The inner peripheral portion of the stabilizer bush other than the portion has a diameter set so as to be fitted around the outer peripheral face of the stabilizer bar with a predetermined interference. Thus no gap is formed.

JP 10 184792 A teaches the idea of forming bulged portions at a predetermined area on the insertion hole of stabilizer bush for the stabilizer bar. Fig. 8 of the reference shows that such bulged portions are formed at opposite ends of the insertion hole. However, the inner diameter D1 of insertion hole at its opposite axial ends other than the bulged portion has been set to be the same as of the outer diameter of torsion portion of the bar. The stabilizer bush is given an amount of pre-compression which corresponds to the dimensional difference between the inner diameter of insertion hole based on the configuration of its bulged portion and the outer diameter of stabilizer bar.

### SUMMARY OF THE INVENTION

The present invention has been achieved in view of the above circumstances, and has an object to prevent abrasion on a face of a stabilizer while facilitating assembling of a stabilizer bush to the stabilizer.

In order to achieve the above object, according to a first feature of the present invention, there is provided a stabilizer supporting structure in accordance with claim 1. Therein a vehicle body supports a stabilizer that comprises a torsion portion extending in a vehicle width direction and arm portions extending from opposite ends of the torsion portion in a longitudinal direction of the vehicle body and connected to right and left suspension devices; a shaft hole of a stabilizer bush formed of an elastic body is fitted to the torsion portion, and an outer peripheral portion of the stabilizer bush is held and fixed between the vehicle body and a mounting bracket, characterized in that, in a non-load state where a load is not applied the stabilizer bush before being fixed, a gap is formed between the shaft hole in the stabilizer bush and an outer peripheral face of the stabilizer.

With the first feature, because a gap is formed between the shaft hole in the unfixed stabilizer bush and the outer peripheral face of the stabilizer, when the shaft hole of the stabilizer bush formed of an elastic body is fitted to the torsion portion from an end of the stabilizer, it is possible to reduce a friction force generated when the stabilizer bush slides on the stabilizer, thereby facilitating the assembling. Also, it is possible to eliminate the need of forming an expanding slot in the stabilizer bush in order to assemble the stabilizer bush to the torsion portion, thereby preventing sand grains or muddy water from entering the expanding slot to cause noise or abrasion of the torsion portion.

According to a second feature of the present invention, in addition to the first feature, a lip is formed at an opening end of the shaft hole in the stabilizer bush so as to come into close contact with an outer peripheral face of the torsion portion.

With the second feature, because a lip is formed at the opening end of the shaft hole of the stabilizer bush so as to come into close contact with the outer peripheral face of the torsion portion, it is possible to prevent sand grains or muddy water from passing through the opening end of the shaft hole of the stabilizer bush to enter a space between the stabilizer bush and the outer peripheral face of the torsion portion, thereby further reliably preventing noise or abrasion of the torsion portion.

The above-mentioned object, other objects, characteristics, and advantages of the present invention will become apparent from a preferred embodiment, which will be described in detail below by reference to the attached drawings.

### BRIEF DESCRIPTION OF THE DRAWINGS

FIG. 1 is a perspective view showing a stabilizer according to an embodiment of the present invention in a state where it is mounted on a vehicle.
FIG. 2 is an enlarged sectional view taken along line 2-2 in FIG. 1.
FIG. 3 is a sectional view taken along line 3-3 in FIG. 2.
FIG. 4 is a view for explaining an operation of sliding a stabilizer bush along the stabilizer.
FIGS. 5A and 5B are view for explaining operation of assembling the stabilizer bush.

### DESCRIPTION OF THE PREFERRED EMBODIMENT

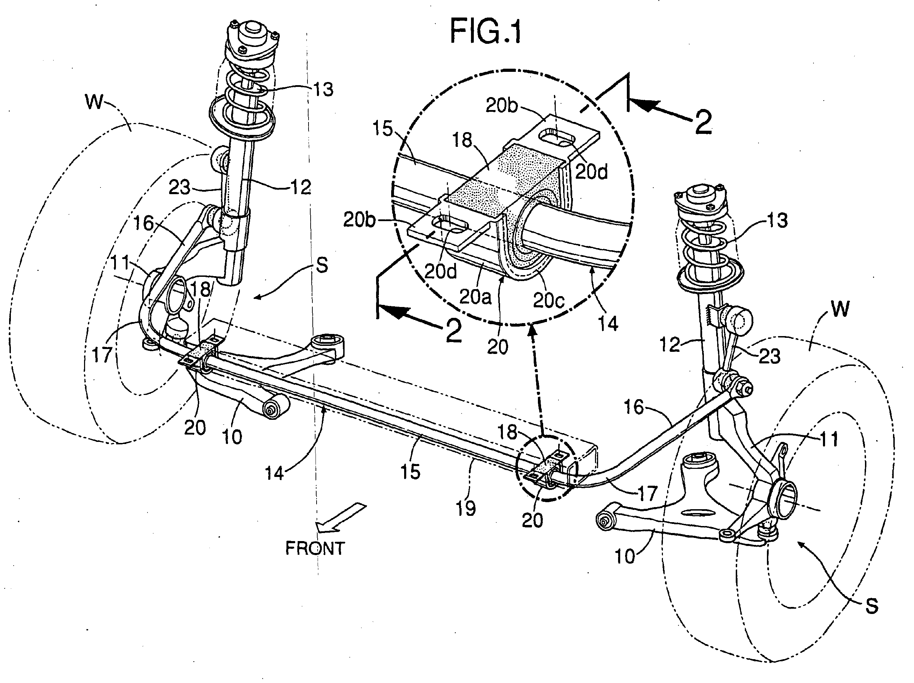

As shown in FIG. 1, strut-type suspension devices S, S suspending right and left wheels W, W comprise: vertically-movable right and left knuckles 11, 11 supported on a vehicle body through a suspension arm 10; dampers 12, 12 connected to upper parts of the knuckles 11, 11 and extending upward; suspension springs 13, 13 arranged coaxially on an upper outer periphery of each of the dampers 12, 12; and a stabilizer 14 provides connection between upper parts of the right and left knuckles 11, 11.

The stabilizer 14 comprises: a torsion portion 15 extending straight in the vehicle width direction; right and left arm portions 16, 16 extending straight rearward in the vehicle body from opposite ends of the torsion portion 15, and connected to the upper parts of the knuckles 11, 11; and right and left curved portions 17, 17 that smoothly connect the torsion portion 15 and the arm portions 16, 16 to each other. Stabilizer bushes 18, 18 made of cylindrical rubber are fitted to opposite ends of the torsion portion 15 adjacent to the right and left curved portions 17, 17. The stabilizer bushes 18, 18 are supported and held between a flat lower face of a vehicle-body frame 19 and mounting brackets 20, 20 fixed thereto.

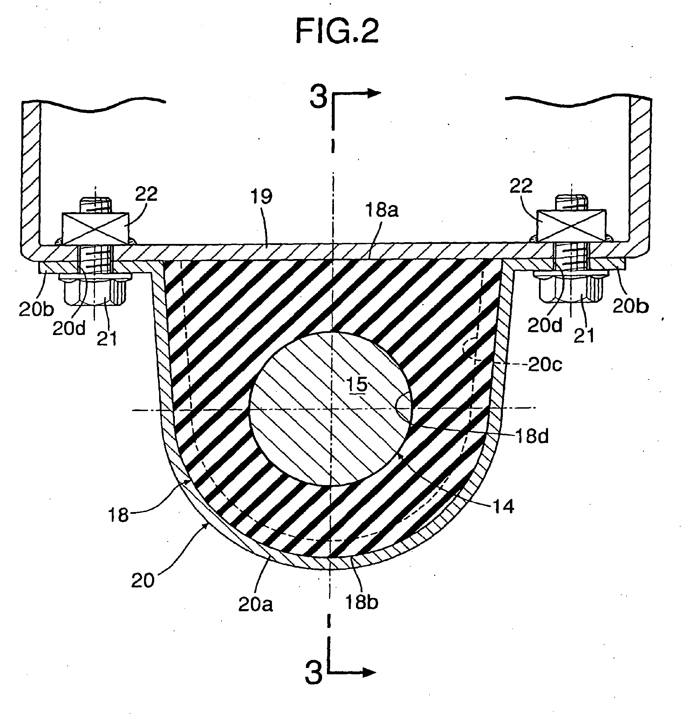

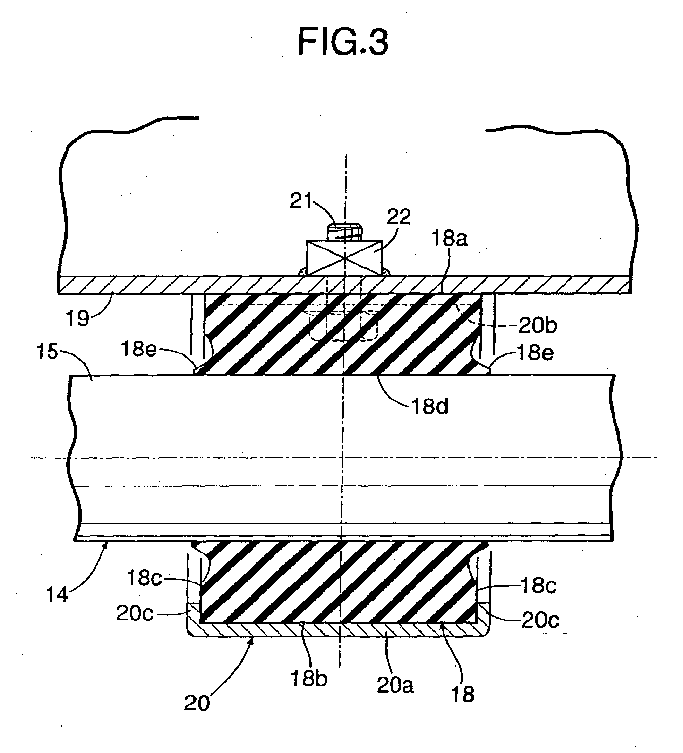

As clearly shown in FIGS. 2 and 3, each stabilizer bush 18 comprises: a flat first outer peripheral face 18a; a U-shaped second outer peripheral face 18b; a pair of side faces 18c, 18c; and the shaft hole 18d opened at both the side faces 18c, 18c and having a circular section to which the torsion portion 15 of the stabilizer 14 is fitted. On the other hand, the mounting bracket 20 comprises: a U-shaped bracket body 20a coming into contact with the U-shaped second outer peripheral face 18b of the stabilizer bush 18; and a pair of mounting portions 20b, 20b extending from opposite ends of the bracket body 20a in directions opposite to each other. Flanges 20c, 20c are formed in the bracket body 20a in order to prevent detachment of the stabilizer bush 18. Bolt holes 20d, 20d are formed in the mounting portions 20b, 20b.

The stabilizer bush 18 having the above-described shape is supported on the vehicle-body frame 19 by fastening bolts 21, 21 penetrating through the bolt holes 20d, 20d of the flanges 20c, 20c in the mounting bracket 20 in a state where a second outer peripheral face 18b thereof is held by the bracket body 20a of the mounting bracket 20 to come into contact with a lower face of the vehicle-body frame 19.

In the stabilizer 14 having the above-described structure, when the right and left wheels W, W are vertically moved in the same phase, the right and left arm portions 16, 16 are vertically moved in the same phase without twisting the torsion portion 15, thereby generating no roll moment; but when the right and left wheels W, W are vertically moved in the opposite phases, the right and left arm portions 16, 16 are vertically moved in the opposite phases to twist the torsion portion 15, thereby generating a roll moment which restricts rolling of the vehicle body. Thus, steering stability of the vehicle can be improved.

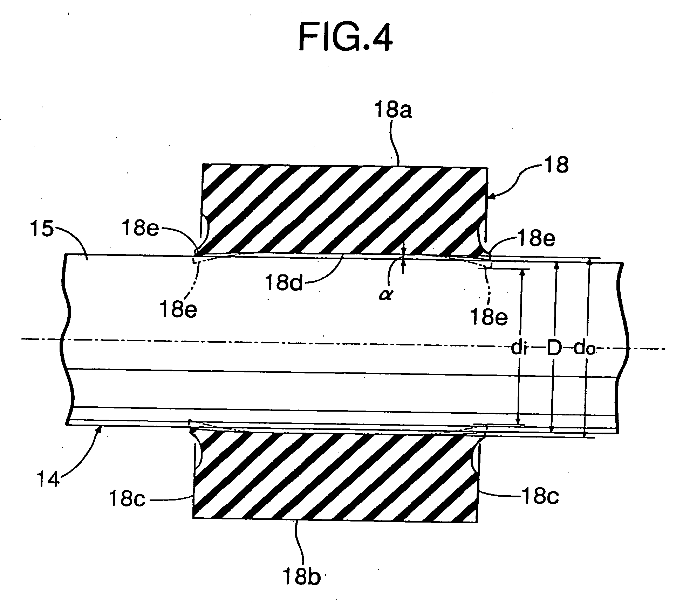

As shown in FIG. 4, annular lips 18e, 18e are formed at both opening ends of the shaft hole 18d of the stabilizer bush 18 so as to radially inwardly project. The diameter di of the lip 18e in a free state shown by the chain line is set to be slightly smaller than the diameter D of the torsion portion 15 of the stabilizer 14. The diameter do of the intermediate portion of the shaft hole 18d held between the pair of lips 18e, 18e is set to be slightly larger than the diameter D of the torsion portion 15 of the stabilizer 14.

Therefore, when the stabilizer bush 18 is slid and moved from the tip end of the arm portion 16 of the stabilizer 14 to a predetermined position in the torsion portion 15, that is, in a state where a radially inward load is not applied from the mounting bracket 20 to the stabilizer bush 18 (non-load state), the lips 18e, 18e of the stabilizer bush 18 having the diameter di smaller than the diameter D of the torsion portion 15 (or the arm portion 16) are elastically deformed radially outward and brought into contact with the outer peripheral face of the torsion portion 15. On the other hand, a gap α is formed at an intermediate portion of the stabilizer bush 18 having the diameter do larger than the diameter D of the torsion portion 15 between the stabilizer bush 18 and the outer peripheral face of the torsion portion 15.

As shown in FIG. 3, in a state where the stabilizer bush 18 is fixed to the vehicle-body frame 19 by the mounting bracket 20, the stabilizer bush 18 is radially inwardly compressed by the mounting bracket 20 to eliminate the gap α (see FIG. 4), and the shaft hole 18d of the stabilizer bush 18 is brought into close contact with the outer peripheral face of the torsion portion 15 due to a predetermined difference in diameter therebetween. Also, the lips 18e, 18e of the stabilizer bush 18 are further elastically deformed radially outwardly, and strongly brought into close contact with the outer peripheral face of the torsion portion 15, thereby exerting a sealing performance.

In the assembling of the stabilizer bush 18 to the torsion portion 15 of the stabilizer 14, an end of the arm portion 16 is inserted into the shaft hole 18d of the stabilizer bush 18; the stabilizer bush 18 is slid and moved along the arm portion 16 and the curved portion 17 to the torsion portion 15; and the stabilizer bush 18 is supported by the vehicle-body frame 19 using the mounting bracket 20.

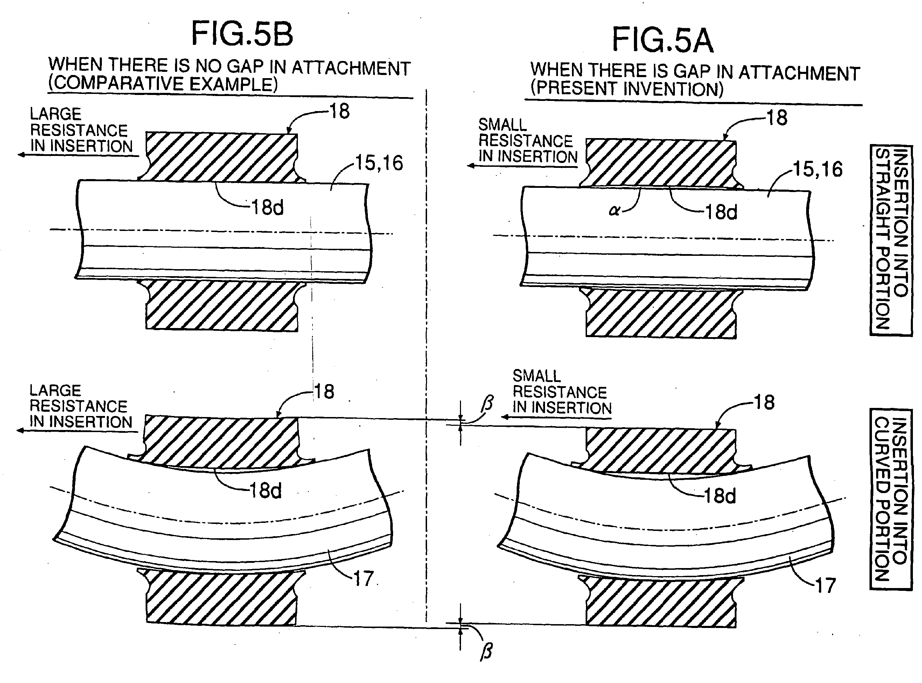

Assuming that the gap α is not present between the inner peripheral face of the shaft hole 18d of the stabilizer bush 18 and the outer peripheral face of the stabilizer 14 at this time, a large friction resistance is generated when the stabilizer bush 18 is slid along the arm portion 16 and the torsion portion 15, as shown in FIG. 5B, leading to a problem of troublesome work of assembling the stabilizer bush 18. Particularly when the stabilizer bush 18 is slid along the curved portion 17, the inner peripheral face of the shaft hole 18d is strongly pressed against the outer peripheral face of the curved portion 17 to generate an extremely large friction force. Thus, there is a problem that the stabilizer bush 18 cannot be passed through the curved portion 17 without application of a large force.

On the other hand, in this embodiment, the gap α is present between the inner peripheral face of the shaft hole 18d in the stabilizer bush 18 and the outer peripheral face of the stabilizer 14 as shown in FIG. 5A. Therefore, a friction resistance is hardly generated when the stabilizer bush 18 is slid along the arm portion 16 and the torsion portion 15, thereby facilitating the work of assembling the stabilizer bush 18. Also, even when the stabilizer bush 18 is slid along the curved portion 17, the effect of the gap α prevents the inner peripheral face of the shaft hole 18d from being strongly pressed onto the outer peripheral face of the curved portion 17. Therefore, the stabilizer bush 18 can be passed through the curved portion 17 by only applying a relatively small force, thereby remarkably facilitating the work of assembling the stabilizer bush 18.

The reason why the formation of the gap α reduces the friction resistance when the stabilizer bush 18 passes through the curved portion 17 is that the friction force generated by a restoring load of the stabilizer bush 18 to return to the free state is reduced as the gap α reduces the radially outward deformation amount of the stabilizer bush 18 by *β·*

As described above, according to this embodiment, because the shaft hole 18d of the stabilizer bush 18 is assembled by being slid from the end of the arm portion 16 to the torsion portion 15 via the curved portion 17, it is possible to eliminate the need of forming an expanding slot in the stabilizer bush 18 so that the stabilizer bush 18 can be directly fitted to the outer peripheral face of the torsion portion 15 of the stabilizer 14 while expanding the expanding slot. Thus, it is possible to prevent sand grains or mud water from entering the expanding slot to cause noise or abrasion of the torsion portion 15 of the stabilizer 14.

Also, because the gap α is formed between the inner peripheral face of the shaft hole 18d in the stabilizer bush 18 and the outer peripheral face of the stabilizer 14, the friction resistance is reduced when the stabilizer bush 18 is slid along the stabilizer 14, thereby remarkably facilitating the work of assembling the stabilizer bush 18. Further, because the opening portions at opposite ends in the shaft hole 18d are sealed by the lips 18e, 18e, there is no fear that sand grains or mud water pass therethrough to lower the durability of the stabilizer 14.

The embodiment of the present invention has been described above, but various changes in design may be made thereto without departing from the subject matter of the present invention.

For example, the stabilizer 14 in this embodiment integrally comprises the torsion portion 15, arm portions 16, 16, and curved portions 17, 17, but the stabilizer 14 may comprise separate arm portions 16, 16 which are fixed to opposite ends of a straight torsion portion 15 with a bolt or the like. In this case, the stabilizer bushes 18, 18 are fitted to the torsion portion 15 before the arm portions 16, 16 are fixed to the torsion portion 15, and then the arm portions 16, 16 are fixed thereto by the bolt or the like.

A strut-type suspension S is shown in this embodiment, but the stabilizer 14 of the present invention is applicable to any type of a suspension device.

Also, in this embodiment, the stabilizer bush 18 is supported on the flat face of the vehicle-body frame 19 by using the U-shaped mounting bracket 20, but the stabilizer bush 18 may be held between a U-shaped recess portion formed in the vehicle-body frame 19 and the flat mounting bracket 20.

Further, in this embodiment, the arm portions 16, 16 of the stabilizer 14 are connected to the dampers 12, 12, but the arm portions 16, 16 of the stabilizer 14 may be connected to the knuckles 11, 11 or the suspension arms 10, 10.

A shaft hole (18d) of a stabilizer bush (18) formed of an elastic body is fitted to a torsion portion (15) from an arm portion through a curved portion of a stabilizer (14). A gap (α) is formed between the shaft hole (18d) in the stabilizer bush (18) and an outer peripheral face of the torsion portion (15). Therefore, it is possible to reduce a friction force generated when the stabilizer bush (18) passes through the curved portion of the stabilizer (14), thereby facilitating the assembling. Also, it is possible to eliminate the need of forming an expanding slot in the stabilizer bush (18) in order to assemble the stabilizer bush (18) to the torsion portion (15), thereby preventing sand grains or muddy water from entering the expanding slot to cause noise or abrasion of the torsion portion (15). Thus, while the assembling of the stabilizer bush (18) to the stabilizer (14) is facilitated, abrasion on a face of the stabilizer (14) is prevented.

## Claims

1. A stabilizer supporting structure in which a vehicle body (19) supports a stabilizer (14) that comprises a torsion portion (15) extending in a vehicle width direction and arm portions (16) extending from opposite ends of the torsion portion (15) in a longitudinal direction of the vehicle body (19) and connected to right and left suspension devices (S);
a shaft hole (18d) of a stabilizer bush (18) formed of an elastic body is fitted to the torsion portion (15), and an outer peripheral portion of the stabilizer bush (18) is held and fixed between the vehicle body (19) and a mounting bracket (20),
wherein a lip (18e) is formed at an opening end of each of the opposite ends of the shaft hole (18d) in the stabilizer bush (18) so as to come into close contact with an outer peripheral face of the torsion portion (15), and
wherein the diameter (di) 01 the lips (18e) in a free state is set to be smaller than the outer diameter (D) of the torsion portion (15) of the stabilizer (14),
**characterized in that**, the intermediate portion of the shaft hole (18d) held between the pair of lips (18e) has a diameter (do) larger than the outer diameter (D) of the torsion portion (15) of the stabilizer (14) and that, in a non-load state where the stabilizer bush (18) is fitted to the torsion portion (15) and where a load is not applied from the mounting bracket (20) to the stabilizer bush (18), the lips (18e) are brought into close contact with the torsion portion (15) and a gap (α) is formed between said intermediate portion of the shaft hole (18d) in the stabilizer bush (18) and the outer peripheral face of the torsion portion (15) of the stabilizer (14).

2. The stabilizer supporting structure according to claim 1 wherein in the mounted state of the mounting bracket (20), the gap (α) is eliminated.

3. The stabilizer supporting structure to claim 1 wherein the lip (18e) is in close contact with the outer peripheral face of the stabilizer (14) even before the mounting bracket (20) is mounted.

## Patentansprüche

1. Stabilisatorlagerungsstruktur, in der ein Fahrzeugaufbau (19) einen Stabilisator (14) lagert, der einen Torsionsabschnitt (15), der sich in Fahrzeugbreitenrichtung erstreckt, sowie Armabschnitte (16), die sich von entgegengesetzten Enden des Torsionsabschnitts (15) in Längsrichtung des Fahrzeugaufbaus (19) erstrecken und mit rechten und linken Aufhängungsvorrichtungen (S) verbunden sind, aufweist;
ein Schaftloch (18d) einer aus einem elastischen Körper gebildeten Stabilisatorbuchse (18) auf den Torsionsabschnitt (15) aufgesetzt ist, und ein Außenumfangsabschnitt der Stabilisatorbuchse (18) zwischen dem Fahrzeugaufbau (19) und einem Befestigungsbeschlag (20) gehalten und fixiert wird,
worin an einem Öffnungsende jedes der entgegengesetzten Enden des Schaftlochs (18d) in der Stabilisatorbuchse (18) eine Lippe (18e) so ausgebildet ist, dass sie in engen Kontakt mit einer Außenumfangsfläche des Torsionsabschnitts (15) kommt, und
worin der Durchmesser (di) der Lippen (18e) im freien Zustand kleiner gemacht ist als der Durchmesser (D) des Torsionsabschnitts (15) des Stabilisators (14),
**dadurch gekennzeichnet, dass** der zwischen dem Lippenpaar (18e) gehaltene Zwischenabschnitt des Schaftlochs (18d) einen Durchmesser (do) hat, der größer ist als der Außendurchmesser (D) des Torsionsabschnitts (15) des Stabilisators (14), und
dass im nicht belasteten Zustand, wo die Stabilisatorbuchse (18) auf den Torsionsabschnitt (15) aufgesetzt ist und wo keine Last von dem Befestigungsbeschlag (20) auf die Stabilisatorbuchse (18) einwirkt, die Lippen (18e) in engen Kontakt mit dem Torsionsabschnitt (15) gebracht werden und zwischen dem Zwischenabschnitt des Schaftlochs (18d) in der Stabilisatorbuchse (18) und der Außenumfangsfläche des Torsionsabschnitts (15) des Stabilisators (14) eine Lücke (α) gebildet wird.

2. Die Stabilisatorlagerungsstruktur nach Anspruch 1, worin im montierten Zustand des Befestigungsbeschlags (20) die Lücke (α) beseitigt ist.

3. Die Stabilisatorlagerungsstruktur nach Anspruch 1, worin die Lippe (18e) in engem Kontakt mit der Außenumfangsfläche des Stabilisators (14) steht, auch bevor der Befestigungsbeschlag (20) montiert ist.

## Revendications

1. Structure de support de stabilisateur dans laquelle une caisse de véhicule (19) supporte un stabilisateur (14) qui comprend une partie de torsion (15) s'étendant dans le sens de la largeur du véhicule et des parties de bras (16) s'étendant à partir des extrémités opposées de la partie de torsion (15) dans une direction longitudinale de la caisse de véhicule (19) et raccordées à des dispositifs de suspension droit et gauche (S) ;
un trou d'arbre (18d) d'une douille (18) de stabilisateur formé avec un corps élastique est monté sur la partie de torsion (15) et une partie périphérique externe de la douille (18) de stabilisateur est maintenue et fixée entre la caisse de véhicule (19) et une console de montage (20),
dans laquelle une lèvre (18e) est formée au niveau d'une extrémité d'ouverture de chacune des extrémités opposées du trou d'arbre (18d) dans la douille (18) de stabilisateur afin de venir en contact étroit avec une face périphérique externe de la partie de torsion (15), et
dans laquelle le diamètre (di) 01 des lèvres (18e) dans un état libre est déterminé pour être inférieur au diamètre externe (D) de la partie de torsion (15) du stabilisateur (14),
**caractérisée en ce que** la partie intermédiaire du trou d'arbre (18d) maintenue entre la paire de lèvres (18e) a un diamètre (do) plus grand que le diamètre externe (D) de la partie de torsion (15) du stabilisateur (14) et **en ce que**, dans un état sans charge dans lequel la douille (18) de stabilisateur est montée sur la partie de torsion (15) et dans lequel une charge n'est pas appliquée de la console de montage (20) sur la douille (18) de stabilisateur, les lèvres (18e) sont amenées en contact étroit avec la partie de torsion (15) et un espace (α) est formé entre ladite partie intermédiaire du trou d'arbre (18d) dans la douille (18) de stabilisateur et la face périphérique externe de la partie de torsion (15) du stabilisateur (14).

2. Structure de support de stabilisateur selon la revendication 1, dans laquelle dans l'état monté de la console de montage (20), l'espace (α) est supprimé.

3. Structure de support de stabilisateur selon la revendication 1, dans laquelle la lèvre (18e) est en contact étroit avec la face périphérique externe du stabilisateur (14) même avant que la console de montage (20) ne soit montée.
